# EUROPEAN PATENT APPLICATION

(11) **EP 4 417 360 A1**
(43) Date of publication of application: **21.08.2024**
(21) Application number: 22880756.6
(22) Date of filing: 26.09.2022
(51) Int. Cl.: B23Q 15/00, G05B 19/4093

(54) **PROCESSING DEVICE AND PROCESSING CONDITIONS SETTING METHOD**

(30) Priority: 14.10.2021 JP 2021169059
(71) Applicant: SEIBU ELECTRIC & MACHINERY CO., LTD., Fukuoka-ken Fukuoka 811-3193 (JP)
(72) Inventor: KAWAKATSU Shota, Koga-shi, Fukuoka 811-3193 (JP); ONO Fumihiro, Koga-shi, Fukuoka 811-3193 (JP); FUKUHARA Shogo, Koga-shi, Fukuoka 811-3193 (JP); NAGANO Kyutaro, Koga-shi, Fukuoka 811-3193 (JP); NAKAGAWA Koyo, Koga-shi, Fukuoka 811-3193 (JP); TSUGAMI Seiya, Koga-shi, Fukuoka 811-3193 (JP); SHINOZAKI Eigo, Koga-shi, Fukuoka 811-3193 (JP); INOUE Daisuke, Koga-shi, Fukuoka 811-3193 (JP); INOUE Tomoki, Koga-shi, Fukuoka 811-3193 (JP)
(74) Representative: Plougmann Vingtoft a/s
(86) International application number: PCT/JP2022/035635
(87) International publication number: WO 2023/063060

(57) **Abstract**

A machining processing apparatus or the like is provided, which is suitable for reducing a burden on a user in adjusting machining conditions using machining results. The machining processing apparatus 1 machines a workpiece according to machining conditions. The machining conditions include multiple items and setting values for each item. The machining processing apparatus 1 includes an individual input processing unit 13, a support input processing unit 15, and an input/output unit 3. The individual input processing unit 13 allows the user to input setting values for each machining conditions item. The support input processing unit 15 calculates a change amount for one or multiple machining conditions items according to a modification of the machining shape of the workpiece input by the user, and instructs the input/output unit 3 to display the one or multiple items to be modified as change details together with the change amount for each item.

## Description

### Technical Field

The present invention relates to a machining processing apparatus and a machining conditions setting method, and particularly to a machining processing apparatus or the like that supports machining processing for a workpiece according to machining conditions.

### Background Art

An arrangement that allows the user to manually input machining conditions for grinding processing is described in Patent document 1.

### Citation List

### Patent Literature

### [Patent document 1]

Japanese Patent Application Laid Open No. 2020-182996

### Summary of Invention

### Technical Problem

Even in a case in which recommended machining conditions are input, machining conditions need to be adjusted according to the results of machining processing. The adjustment of machining conditions is handled by what is known as "know-how". Only a simple description is made regarding specific items of machining conditions to be adjusted and a method for adjusting such items, which is a high hurdle for a beginner-level operator.

Accordingly, it is a purpose of the present invention to provide a machining processing apparatus or the like suitable for reducing the burden on the user when the user adjusts machining conditions based on machining processing results.

### Solution of Problem

A first aspect of the present invention relates to a machining processing apparatus configured to machine a workpiece according to machining conditions. The machining is performed in multiple processes. The machining conditions include multiple items and setting values for the respective items for each of the multiple processes. The same item is defined for each process. The machining processing apparatus includes an individual input processing unit, a support input processing unit, and an input/output unit. The support input processing unit calculates an amount of change to be used for each process with respect to a setting value to be set for one or multiple items of the machining conditions, and displays the processes to be modified and the one or the multiple items as detailed change items together with the amount of change for each item, according to a single input made by a user for a modification of a machining shape of the workpiece. The individual input processing unit performs input processing for a modification in the form of a numerical value for a setting value to be set for individual items of the machining conditions for each process with reference to detailed change items input by the user.

A second aspect of the present invention relates to the machining processing apparatus according to the first aspect. The multiple items include a first item, a second item, and a third item. The support input processing unit performs processing according to the single input such that a setting value of the first item is not modified for all the processes, such that a setting value of the second item is not modified for a part of the processes and the setting value thereof is calculated and displayed for the remaining processes, and such that a setting value of the third item is calculated and displayed for all the processes.

A third aspect of the present invention relates to a machining conditions setting method used for a machining processing apparatus configured to machine a workpiece according to machining conditions. The machining processing is performed in multiple processes. The machining conditions include multiple items and setting values for each of the multiple processes. The same item is defined for each process. The machining processing apparatus includes an individual input processing unit, a support input processing unit, and an input/output unit. The support input processing unit calculates an amount of change to be used for each process with respect to a setting value to be set for one or multiple items of the machining conditions, and displays the processes to be modified and the one or the multiple items as detailed change items together with the amount of change for each item, according to a single input made by a user for a modification of a machining shape of the workpiece. The individual input processing unit performs input processing for a modification in the form of a numerical value for a setting value to be set for individual items of the machining conditions for each process with reference to detailed change items input by the user.

A fourth aspect of the present invention relates to the machining conditions setting method according to the third aspect. The multiple items include a first item, a second item, and a third item. The support input processing unit performs processing according to the single input such that a setting value of the first item is not modified for all the processes, such that a setting value of the second item is not modified for a part of the processes and the setting value thereof is calculated and displayed for the remaining processes, and such that a setting value of the third item is calculated and displayed for all the processes.

### Advantageous Effects of Invention

With each aspect of the present invention, this allows the user to specify a modification item in a visual manner using the shape of a workpiece after machining, so as to modify the machining conditions. Furthermore, this allows the user to specifically perform fine adjustment or the like of a setting value for each item of the machining conditions according to the specific shape of the workpiece. This reduces the burden on the user for adjusting the machining conditions for both beginners and advanced users.

### Brief Description of Drawings

Fig. 1A is a block diagram showing an example of a configuration of a machining processing apparatus according to an embodiment of the present invention, and Figs. 1B through 1D are flowcharts each showing an example of processing.
Fig. 2 shows an example of a screen displayed by the input/output unit 3 controlled by the input/output control unit 5 so as to display machining conditions that have been set.
Fig. 3 shows an example of a screen for specifically indicating each item of the machining conditions as numerical values, etc.
Fig. 4 shows an example of a screen for indicating the shape so as to specify a modification by visual means.
Fig. 5 shows an example of a screen for specifically specifying a modification by visual means.
Fig. 6 is an enlarged view of a display field SA8 shown in Fig. 5.

### Description of Embodiments

Description will be made with reference to the drawings regarding an embodiment of the present invention. It should be noted that such an embodiment of the present invention is not restricted to an example described below.

### [Examples]

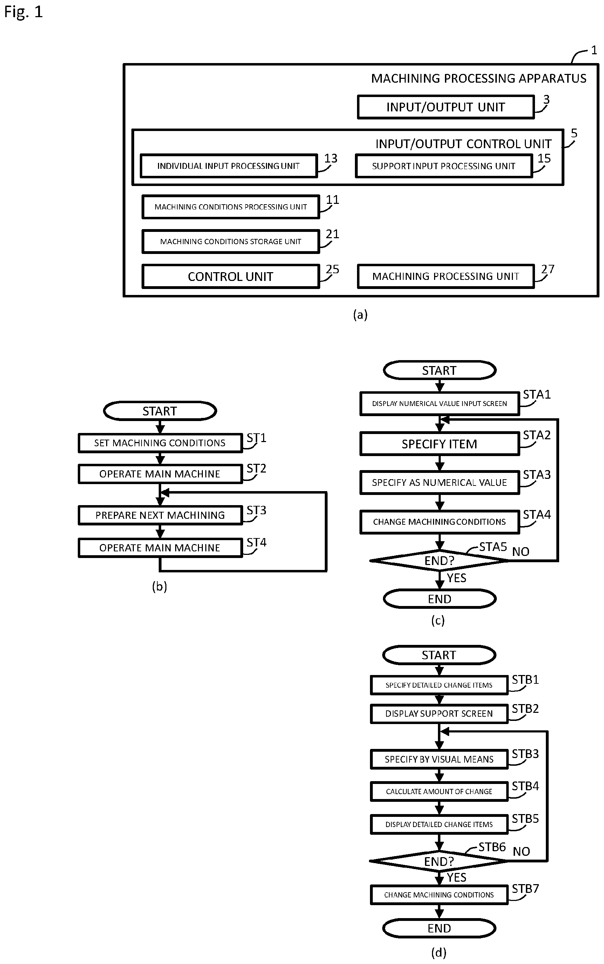

Fig. 1A is a block diagram showing an example of the configuration of a machining processing apparatus according to an embodiment of the present invention. Figs. 1B through 1D are flowcharts each showing an example of processing. Description will be made with reference to Fig. 1 regarding an example of the configuration and the processing of the machining processing apparatus.

The machining processing apparatus 1 includes an input/output unit 3, an input/output control unit 5, a machining conditions processing unit 11, a machining conditions storage unit 21, a control unit 25, and a machining processing unit 27. The input/output control unit 5 includes an individual input processing unit 13 and a support input processing unit 15.

The machining processing unit 27 performs machining processing on a workpiece under the control of the control unit 25 according to the machining conditions stored in the machining conditions storage unit 21. Examples of the machining processing include wire electrical discharge machining.

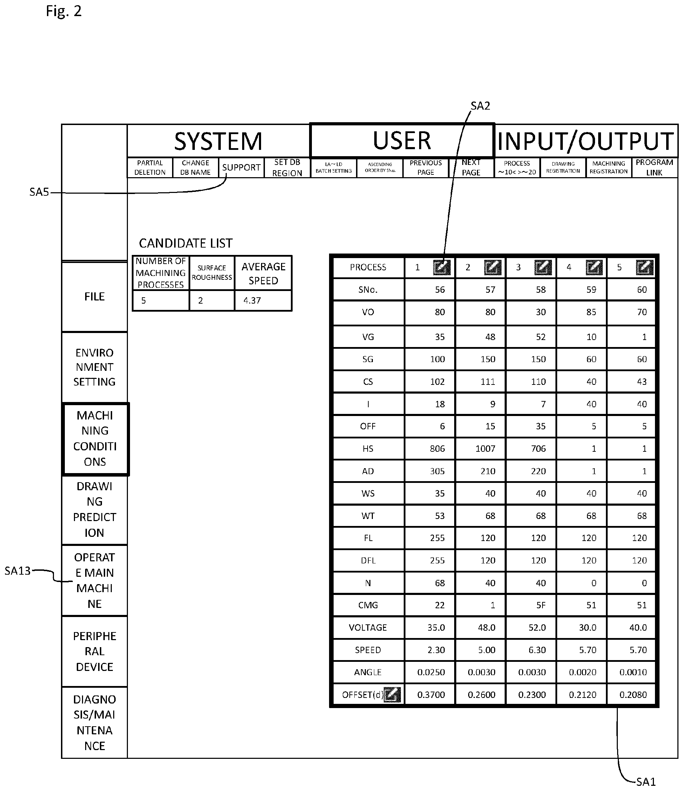

The machining processing is performed in multiple processing steps (e.g., Fig. 2 shows machining processing in five processing steps). Examples of the multiple processing steps that form the machining processing include a processing step for rough machining, a processing step for finishing machining as a last processing step, etc. By repeating the machining processing in a similar manner while switching the setting values for the same workpiece in the multiple processing steps that form the machining processing, such an arrangement provides a single machining process as a whole. Multiple machining conditions are designed corresponding to the multiple processing steps that form the machining processing (e.g., in Fig. 2, machining conditions are set for each of the five processing steps). The machining conditions each include multiple items and a setting value for each item. Each conditions item includes multiple items and a setting value for each item. Each process includes the same items.

The input/output unit 3 is configured as a touch panel, for example. The input/output unit 3 allows information to be displayed under the control of the input/output control unit 5, and allows input to be received from the user. It should be noted that the input/output unit 3 may be configured as a keyboard, mouse, or the like, which allows the user to input numerical values or the like, for example.

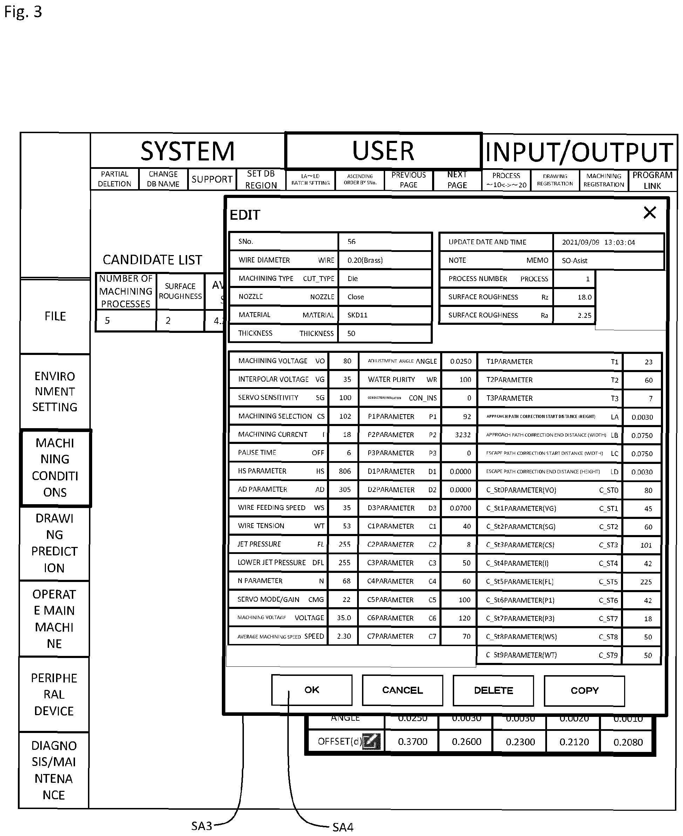

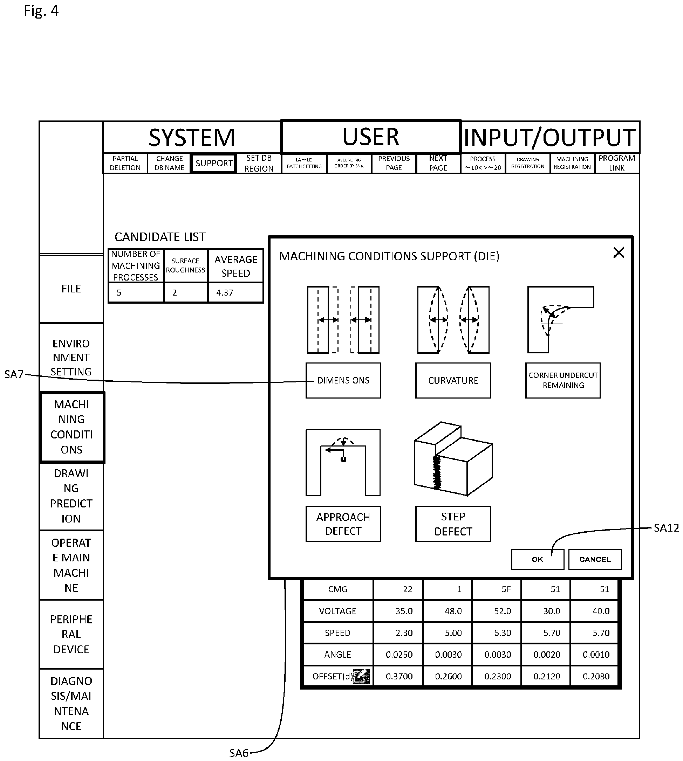

The machining conditions processing unit 11 may be configured as a processor that operates according to a program, for example. The machining conditions processing unit 11 performs processing with respect to the machining conditions stored in the machining conditions storage unit 21. The machining conditions include multiple items and setting values each set for the corresponding item. As with conventional arrangements such as a character user interface or the like, the machining conditions processing unit 11 allows the user to specifically specify the machining conditions based on a setting value to be set for each item included in the machining conditions in the form of a numerical value or the like (see Fig. 3, for example). The individual input processing unit 13 performs input/output processing that corresponds to such individual specifications. Also, such an arrangement allows the specifications to be made using a visual means such as a graphical user interface (see Figs. 4 through 6, for example). The support input processing unit 15 performs the input/output processing that corresponds to the specifications using such a visual means.

The individual input processing unit 13 may be configured as a processor that operates according to a program, for example. When the user specifically inputs the setting value for each item of the machining conditions in the form of a numerical value or the like, the individual input processing unit 13 performs processing such as setting of the setting value for a specified item of the machining conditions to the numerical value thus input. The machining conditions processing unit 11 stores the machining conditions thus set in the machining conditions storage unit 21.

The support input processing unit 15 is configured as a processor that operates according to a program, for example. When the user makes an instruction to modify the machining shape by visual means, the support input processing unit 15 calculates the amounts of changes with respect to the items of the machining conditions required to be modified according to the input instruction, and generates modification conditions which are information required to specify the amount of change for each item of the machining conditions to be modified. The machining conditions processing unit 11 instructs the machining conditions storage unit 21 to store the machining conditions thus modified according to the modification conditions.

Fig. 1B is a flowchart showing the overall process.

First, the user inputs specific information, such as a numerical value or the like, for the setting value of each item of the machining conditions. For example, the user selects the wire diameter to be used, the machining method, the kind of material and the thickness thereof to be machined, the surface roughness to be finished, etc., so as to narrow down the conditions. The individual input processing unit 13 processes the information thus input by the user. The machining conditions processing unit 11 instructs the machining conditions storage unit 21 to store the machining conditions with setting value that correspond to each item of the machining conditions according to the input information (Step ST1).

The user operates the input/output unit 3 so as to make an instruction to operate the machining apparatus. The control unit 25 controls the machining processing unit 27 so as to machine a workpiece according to the machining conditions stored in the machining conditions storage unit 21 (Step ST2).

The user measures the machining error or the like with respect to the workpiece thus machined, for example. Subsequently, the user inputs the information for modifying the machining conditions. The input/output control unit 5 and the machining conditions processing unit 11 modify the machining conditions using the information for modification thus input, so as to prepare for the next machining (Step ST3) .

Such an arrangement allows the user to make a specific instruction to modify the setting value for each item of the machining conditions in the form of a numerical value or the like. Also, such an arrangement allows the user to specify a change of the machining shape using a visual means. The individual input processing unit 13 processes the information specifically input in the form of a numerical value or the like in order to correct the machining conditions stored in the machining conditions storage unit 21. Furthermore, the support input processing unit 15 processes the information the information specified using a visual means for modifying the machining shape. Furthermore, the support input processing unit 15 calculates the amount of change with respect to the setting value for each item of the machining shape according to the information thus specified, so as to generate the modification conditions.

After the user makes an instruction to modify the machining conditions, the user makes an instruction to operate the machining apparatus using the input/output unit 3. The control unit 25 controls the machining processing unit 27 according to the machining conditions stored in the machining conditions storage unit 21 so as to machine the workpiece (Step ST4). Subsequently, the flow returns to Step ST3.

Fig. 1C shows an example of the processing in a case in which a specific modification instruction is made with respect to the setting value of each item of the machining conditions in the form of a numerical value or the like. In a case in which the user makes an instruction to input a numerical value or the like for each of the items of the machining conditions, the individual input processing unit 13 displays a screen that allows a numerical value or the like to be input for each of the items (Step STA1). The user specifies the item to be modified (Step STA2), and inputs specific information in the form of a numerical value or the like (Step STA3). The individual input processing unit 13 performs input processing with respect to the specific information input for each item by the user (Step STA4). The individual input processing unit 13 judges whether or not the user has made an instruction to end the modification processing (Step STA5). When the modification processing is not to be ended, the flow returns to Step STA2. When the user has made an instruction to end the modification processing, the individual input processing unit 13 modifies the setting value for each item of the machining conditions stored in the machining conditions storage unit 21 according to the specific information input by the user. The input/output control unit 5 instructs the input/output unit 3 to redisplay the screen such that the screen that allows the user to input a numerical value or the like for each item is switched back to the original screen, and ends the processing.

Fig. 1D shows an example of the processing in a case in which a modification instruction has been made using a visual means. In a case in which the user makes an instruction to input using the visual means, the support input processing unit 15 identifies items to be modified according to an instruction input by means of the visual means and information to be used to calculate the amount of change for each of such items (Step STB1). Subsequently, the support input processing unit 15 displays a screen that allows the user to make a modification instruction using the visual means and a screen for displaying the amount of change for each item to be modified as the detailed change item (Step STB2). The user uses the screen thus displayed to specify the amount of change for modifying the machining shape via the visual means (Step STB3). The support input processing unit 15 calculates the amount of change that corresponds to the item to be modified thus specified as detailed items of change according to the modification thus specified (Step STB4). The support input processing unit 15 instructs the input/output unit 3 to display the specified amount of modification, and to display the items to be modified according to the detailed change items and the amount of change thereof on the screen that allows the user to make an instruction to perform modification using the visual means (Step STB5). The support input processing unit 15 judges whether or not the user has made an instruction to end the modification operation (Step STB6). When judgment has been made that the user has not made an instruction to end the modification operation, the flow returns to Step STB3. When judgment has been made that the user has made an instruction to end the modification operation, the support input processing unit 15 generates the modification conditions (Step STB7). Subsequently, the input/output control unit 5 instructs the input/output unit 3 to redisplay the screen such that the screen that allows the user to make an input using a visual means is switched back to the original screen, and ends the processing.

Specific description will be made with reference to Figs. 2 through 6 regarding an example of processing.

Fig. 2 shows an example of the screen on which the machining conditions thus set are displayed by the input/output unit 3 according to an instruction from the input/output control unit 5.

The machining conditions thus set are displayed in a display area SA1. In this example, the machining processing is performed in five processes. A single machining conditions item is set for each process, and accordingly, the total number of machining conditions thus set is five. The "PROCESS" field indicates the order of machining. "SNo." represents a serial number to be associated with the machining conditions. "V0", ..., "OFFSET (d) " each represent the corresponding items included in the machining conditions.

In a case in which the user specifically makes an instruction with respect to each item of the machining conditions that correspond to the first process in the form of a numerical value or the like, the user uses the icon SA2 arranged to the side of the "1" of the "PROCESS" item.

Fig. 3 shows an example of the screen for specifically making an instruction in the form of a numerical value or the like for each item of the machining conditions. As with conventional techniques, this arrangement allows the user to input a numerical value or the like that corresponds to each item using a display field SA3. The individual input processing unit 13 performs the input processing that corresponds to each item. This arrangement allows the user to specify an "OK" button SA4 so as to make an instruction to end the input processing using this screen. The individual input processing unit 13 modifies the setting value for each item of the machining conditions in the form of a numerical value or the like according to the input processing that corresponds to the corresponding item. The input/output control unit 5 returns the display provide by the input/output unit 3 to the state shown in Fig. 2.

In Fig. 2, this arrangement allows the user to specify a "Support" button SA5 so as to make an instruction to make a modification using a visual means.

Fig. 4 shows an example of the screen for showing the shapes to be used for the user to specifically make an instruction to make a modification by visual means. Upon specifying the "Support" button SA5, a display field SA6 is displayed. This allows the user to specify a modification type of the machining shape. In this example, this arrangement allows the user to select "Dimensions", "Curvature", "Corner undercut remaining", "Approach defect", and "Step defect" as a shape to be modified. Different items are defined for the machining conditions to be modified according to the modification type of the machining shape. The support input processing unit 15 identifies the items of machining conditions to be modified according to the modification type of the machining shape thus specified and the information required to calculate the amount of change thereof (see Step STB1 in Fig. 1D). Description will be made below regarding an example in which the user specifies the "Dimensions" button SA7 so as to specify "Dimensions" as the modification type of the machining shape.

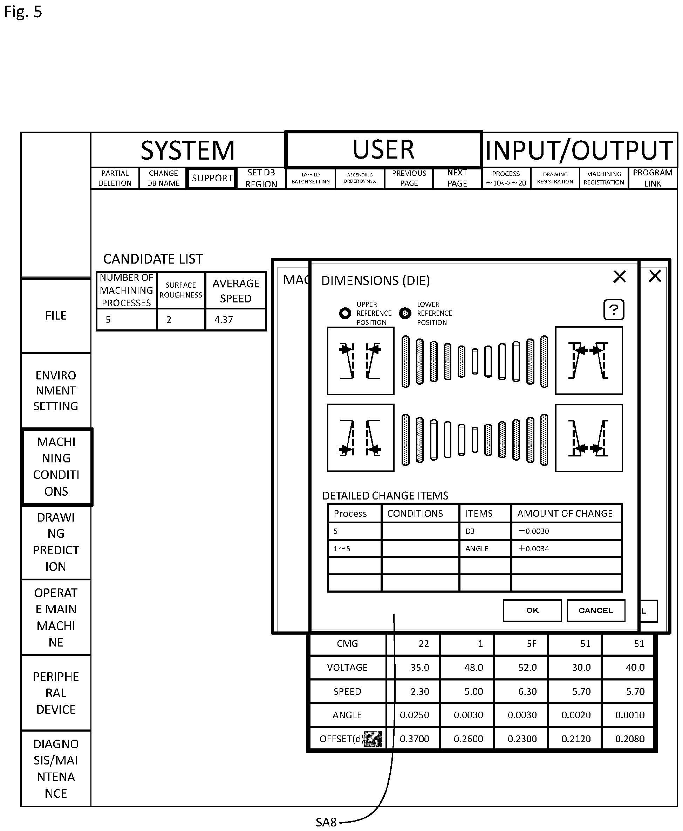

Fig. 5 shows an example of the screen that allows the user to specifically make an instruction to make a modification using a visual means. Upon specifying the "Dimensions" button SA7 by the user, the display field SA8 is displayed (see Step STB2 in Fig. 1D).

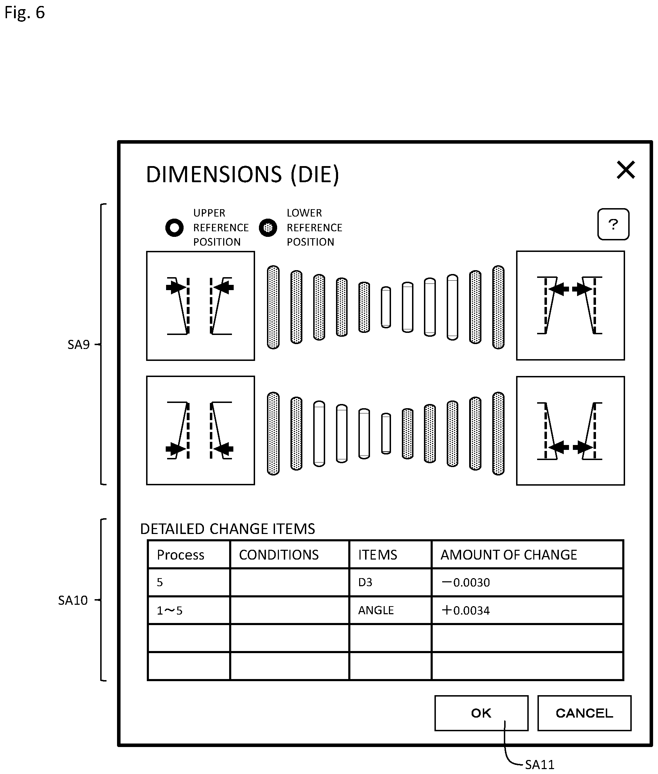

Fig. 6 is an enlarged view of the display field SA8. The display field SA8 includes a display portion SA9 that allows the user to specify the amount of modification of the machining shape by a visual means and a display region portion SA10 in which the detailed items of the change are displayed.

First, the user uses the display region SA9 to specify a reference position, i.e., to select from among the upper reference position or the lower reference position. This selection is performed because there is a difference in the amount of change according to whether the upper reference position or the lower reference position is selected. Subsequently, the user specifies the amount of modification of the upper portion of the machining shape and the lower portion of the machining shape (see Step STB3 in Fig. 1D).

The support input processing unit 15 calculates and displays the amount of change for each item to be modified using the amount of modification of the machining shape thus visually specified by the user (see Steps STB4 and STB5 in Fig. 1D). In this example, the item D3 of the fifth process is modified by -0.0030. Furthermore, the machining conditions item "ANGLE" of each of the first through fifth processes is modified by +0.0034. As described above, the setting value of the first item of the machining conditions is not modified for all the processes according to a single input made by the user for modifying the machining shape of the workpiece. The second item (e.g., "D3" described above) is modified such that the setting value is calculated and displayed for a part of the processes while the amount of change of the setting value is not changed for the remaining processes. The third item (e.g., "ANGLE" described above) is modified such that the amount of change of the setting value is calculated and displayed for all the processes.

As described above, the items to be modified vary according to the modification of the machining shape. It is difficult for the user to understand all the items. Accordingly, it is a great help for the user to indicate the modification of the machining shape in a visual manner. However, such a suggestion of modifications in a visual manner has the potential to involve typification of the modifications. In some cases, this leads to a problem in that such modification suggestion is not capable of providing a modification with sufficient precision. In this case, such an arrangement allows the user to confirm the item required to be modified and the amount of change thereof with reference to the fields of detailed change items. This allows the user to solve this problem by making an instruction to make a required modification in the form of a specific numerical value using the input screen shown in Fig. 3.

As described above, with such an arrangement in which the detailed change items are displayed according to a modification instruction in a visual manner, this arrangement expands a conventional method for allowing the user to specify a modification in a numerical manner, thereby providing a modification with improved precision.

After the completion of the visual instruction to make a modification of the machining shape, the user specifies the "OK" button SA11 (see Step STB6 in Fig. 1D). Upon specifying the "OK" button SA11, the input/output control unit 5 returns the display of the input/output control unit 3 to the state shown in Fig. 4.

In Fig. 4, after the completion of the visual instruction to make a modification for each shape, the user specifies the "OK" button SA12. The machining conditions processing unit 11 changes the machining conditions stored in the machining conditions storage unit 21. The input/output control unit 5 returns the display provided by the input/output unit 3 to the state shown in Fig. 2.

Upon specifying "Main machining apparatus operation" (display unit SA13) by the user so as to make an instruction to machine a workpiece, the control unit 25 controls the machining processing unit 27 so as to machine the workpiece according to the machining conditions stored in the machining conditions storage unit 21.

### Reference Signs List

1 machining processing apparatus, 2 input/output unit, 5 input/output control unit, 11 machining conditions processing unit, 13 individual input processing unit, 15 support input processing unit, 21 machining conditions storage unit, 25 control unit, 27 machining processing unit.

## Claims

1. A machining processing apparatus configured to machine a workpiece according to machining conditions, wherein the machining is performed in a plurality of processes,
wherein the machining conditions include a plurality of items and setting values for the respective items for each of the plurality of processes,
wherein the same item is defined for each process,
wherein the machining processing apparatus comprises an individual input processing unit, a support input processing unit, and an input/output unit,
wherein the support input processing unit calculates an amount of change to be used for each process with respect to a setting value to be set for one or a plurality of items of the machining conditions, and displays the processes to be modified and the one or the plurality of items as the detailed change items together with the amount of change for each item, according to a single input made by a user for a modification of a machining shape of the workpiece,
and wherein the individual input processing unit performs input processing for a modification in the form of a numerical value for a setting value to be set for individual items of the machining conditions for each process with reference to detailed change items input by the user.

2. The machining processing apparatus according to claim 1, wherein the plurality of items includes a first item, a second item, and a third item,
wherein the support input processing unit performs processing according to the single input such that a setting value of the first item is not modified for all the processes, such that a setting value of the second item is not modified for a part of the processes and the setting value thereof is calculated and displayed for the remaining processes, and such that a setting value of the third item is calculated and displayed for all the processes.

3. A machining conditions setting method used for a machining processing apparatus configured to machine a workpiece according to machining conditions, wherein the machining processing is performed in a plurality of processes,
wherein the machining conditions include a plurality of items and setting values for each item of the plurality of processes,
wherein the same item is defined for each process,
wherein the machining processing apparatus comprises an individual input processing unit, a support input processing unit, and an input/output unit,
wherein the support input processing unit calculates an amount of change to be used for each process with respect to a setting value to be set for one or a plurality of items of the machining conditions, and displays the processes to be modified and the one or the plurality of items as detailed change items together with the amount of change for each item, according to a single input made by a user for a modification of a machining shape of the workpiece,
and wherein the individual input processing unit performs input processing for a modification in the form of a numerical value for a setting value to be set for individual items of the machining conditions for each process with reference to detailed change items input by the user.

4. The machining conditions setting method according to claim 3, wherein the plurality of items includes a first item, a second item, and a third item,
wherein the support input processing unit performs processing according to the single input such that a setting value of the first item is not modified for all the processes, such that a setting value of the second item is not modified for a part of the processes and the setting value thereof is calculated and displayed for the remaining processes, and such that a setting value of the third item is calculated and displayed for all the processes.
